# EUROPEAN PATENT APPLICATION

(11) **EP 4 644 022 A1**
(43) Date of publication of application: **05.11.2025**
(21) Application number: 25167235.8
(22) Date of filing: 31.03.2025
(51) Int. Cl.: B23B 45/02, B25B 21/00, B25D 16/00, B25F 5/00

(54) **ELECTRIC DRILL AND HANDHELD POWER TOOL**

(30) Priority: 26.04.2024 CN 202410513361; 26.04.2024 CN 202410516908; 26.04.2024 CN 202410516809
(71) Applicant: Nanjing Chervon Industry Co., Ltd., Nanjing, Jiangsu 211106 (CN)
(72) Inventor: WANG, Jie, Nanjing (CN); LU, Wei, Nanjing (CN); LI, Guang, Nanjing (CN)
(74) Representative: Sun, Yiming

(57) **Abstract**

An electric drill includes a housing including at least a grip and a battery pack interface, where the battery pack interface is used for mounting a battery pack for supplying power to the electric drill; an electric motor disposed in the housing and including a stator and a rotor; a driver circuit including multiple switches disposed on a current path from the battery pack to the electric motor; a controller configured to switch on and off the multiple switches to adjust power supply from the battery pack to the electric motor; and an output shaft for mounting a working head. The electric drill further includes a transmission mechanism connected between the rotor and the output shaft, where the transmission mechanism is a two-stage deceleration mechanism and includes a first-stage deceleration mechanism and a second-stage deceleration mechanism, the electric motor drives the working head to rotate via the transmission mechanism and the output shaft, and the maximum rotational speed of the working head is greater than or equal to 2800 rpm.

## Description

### TECHNICAL FIELD

The present application relates to the technical field of tools and, in particular, to an electric drill and a handheld power tool.

### BACKGROUND

The power tool is more environmentally friendly than the engine tool and is therefore widely used. Generally, the electric motor drives the power tool to work. With the technological advancements, the rotational speed of the handheld power tool such as an electric drill gradually increases. The higher rotational speed can deliver a better experience to the user.

This part provides background information related to the present application, and the background information is not necessarily the existing art.

### SUMMARY

An electric drill includes a housing including at least a grip and a battery pack interface, where the battery pack interface is used for mounting a battery pack for supplying power to the electric drill; an electric motor disposed in the housing and including a stator and a rotor; a driver circuit including multiple switches disposed on a current path from the battery pack to the electric motor; a controller configured to switch on and off the multiple switches to adjust power supply from the battery pack to the electric motor; and an output shaft for mounting a working head. The electric drill further includes a transmission mechanism connected between the rotor and the output shaft, where the transmission mechanism is a two-stage deceleration mechanism and includes a first-stage deceleration mechanism and a second-stage deceleration mechanism, the electric motor drives the working head to rotate via the transmission mechanism and the output shaft, and the maximum rotational speed of the working head is greater than or equal to 2800 rpm.

In some examples, the electric drill includes two speed gears which are a high speed gear and a low speed gear.

In some examples, the diameter of the electric motor is greater than 50 mm.

In some examples, the voltage of the battery pack is greater than or equal to 20 V.

In some examples, the battery pack is a pouch battery pack.

In some examples, the low speed ratio of the transmission mechanism is less than or equal to 15, and the high speed ratio of the transmission mechanism is greater than or equal to 45.

In some examples, when the electric drill is in the high speed gear, the ratio of the rotational speed of the electric motor to the rotational speed of the working head is the low speed ratio; and when the electric drill is in the low speed gear, the ratio of the rotational speed of the electric motor to the rotational speed of the working head is the high speed ratio.

In some examples, when the torque of the electric drill is greater than or equal to 6 newton-meters and less than or equal to 8 newton-meters, the rotational speed of the electric drill is maintained at 2000 rpm.

In some examples, the electric motor is configured to achieve the maximum rotational speed of the working head based on field-oriented control (FOC) control.

In some examples, based on FOC field-weakening control, the maximum rotational speed of the electric motor is less than or equal to 40000 rpm.

In some examples, the controller is configured to control the voltage outputted from the battery pack to the electric motor to change approximately in a sine wave or a saddle wave.

In some examples, the electric drill further includes an actuator sleeve and a detection element, where the actuator sleeve is operable by a user to rotate about the output shaft to set the working mode of the electric drill, the detection element detects the rotational state of the actuator sleeve, and the controller is configured to be communicatively connected to the detection element to acquire the rotational state and acquire the working mode according to the rotational state.

In some examples, when the electric drill is an impact drill, the working mode includes a drill gear, a hammer gear, and a screw gear, and the rotational speed limit of the drill gear is higher than the rotational speed limit of the hammer gear and the rotational speed limit of the screw gear.

In some examples, when the electric drill is in the drill gear, the maximum rotational speed of the working head of the electric drill is greater than or equal to 2800 rpm.

In some examples, when the electric drill is in the hammer gear or the screw gear, the maximum rotational speed of the working head of the electric drill is greater than or equal to 2300 rpm.

In some examples, a handheld power tool includes a housing including at least a grip and a battery pack interface, where the battery pack interface is used for mounting a battery pack for supplying power to the handheld power tool; an electric motor disposed in the housing and including a stator and a rotor, where the maximum rotational speed of the electric motor is less than or equal to 40000 rpm; a driver circuit including multiple switches disposed on a current path from the battery pack to the electric motor; a controller configured to switch on and off the multiple switches to adjust power supply from the battery pack to the electric motor; and an output shaft for mounting a working head. The handheld power tool further includes a transmission mechanism connected between the rotor and the output shaft, where the electric motor drives the working head to rotate via the transmission mechanism and the output shaft, and the maximum rotational speed of the working head is greater than or equal to 2800 rpm.

In some examples, a handheld power tool includes a housing including at least a grip and a battery pack interface, where the battery pack interface is used for mounting a battery pack for supplying power to the handheld power tool; an electric motor disposed in the housing and including a stator and a rotor; a driver circuit including multiple switches disposed on a current path from the battery pack to the electric motor; a controller configured to switch on and off the multiple switches to adjust power supply from the battery pack to the electric motor; and an output shaft for mounting a working head. The handheld power tool further includes a transmission mechanism connected between the rotor and the output shaft, where the electric motor drives the working head to rotate via the transmission mechanism and the output shaft, and when the torque is basically 6 to 8 newton-meters, the maximum rotational speed of the working head is greater than or equal to 2000 rpm.

In some examples, the handheld power tool is a dual-speed electric drill.

In some examples, the maximum rotational speed of the electric motor is less than or equal to 40000 rpm.

In some examples, the low speed ratio of the transmission mechanism is less than or equal to 15, and the high speed ratio of the transmission mechanism is greater than or equal to 45.

### BRIEF DESCRIPTION OF DRAWINGS

FIG. 1 is a side view of a handheld power tool according to an example.
FIG. 2 is a sectional view of the handheld power tool in FIG. 1.
FIG. 3 is a sectional view of the handheld power tool in FIG. 1 in a high speed gear.
FIG. 4 is a sectional view of the handheld power tool in FIG. 1 in a low speed gear.
FIG. 5 is an exploded view of the multi-stage planetary transmission group of the handheld power tool in FIG. 1.
FIG. 6 is a side view of the handheld power tool in FIG. 1 including an operating member.
FIG. 7 is a side view of the handheld power tool in the high speed gear corresponding to FIG. 3.
FIG. 8 is a side view of the handheld power tool in the low speed gear corresponding to FIG. 4.
FIG. 9 is a circuit block diagram of the handheld power tool in FIG. 1.
FIG. 10 shows a signal processing module of a controller of the handheld power tool in FIG. 1.
FIG. 11 is a flowchart of a control method for the handheld power tool in FIG. 1.
FIG. 12 is a sectional view of the handheld power tool in FIG. 1 including a detection element.
FIG. 13 is a schematic diagram illustrating that a conduction angle of an electric motor in FIG. 9 is 120 degrees.
FIG. 14 is a schematic diagram illustrating that a conduction angle of an electric motor in FIG. 9 is 150 degrees.
FIG. 15 is a sectional view illustrating that a clamping mechanism of a handheld power tool includes an anti-loosening material according to an example.
FIG. 16 is a sectional view illustrating that a clamping mechanism of a handheld power tool includes engagement portions according to an example.
FIG. 17 is a sectional view illustrating that the clamping mechanism in FIG. 16 includes the engagement portions from another perspective.
FIG. 18 is a sectional view illustrating that a clamping mechanism of a handheld power tool includes an elastic piece according to an example.
FIG. 19 is a sectional view illustrating that a clamping mechanism of a handheld power tool includes a spring according to an example.
FIG. 20 is a perspective view of a printed circuit board (PCB) box in the handheld power tool in FIG. 1.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

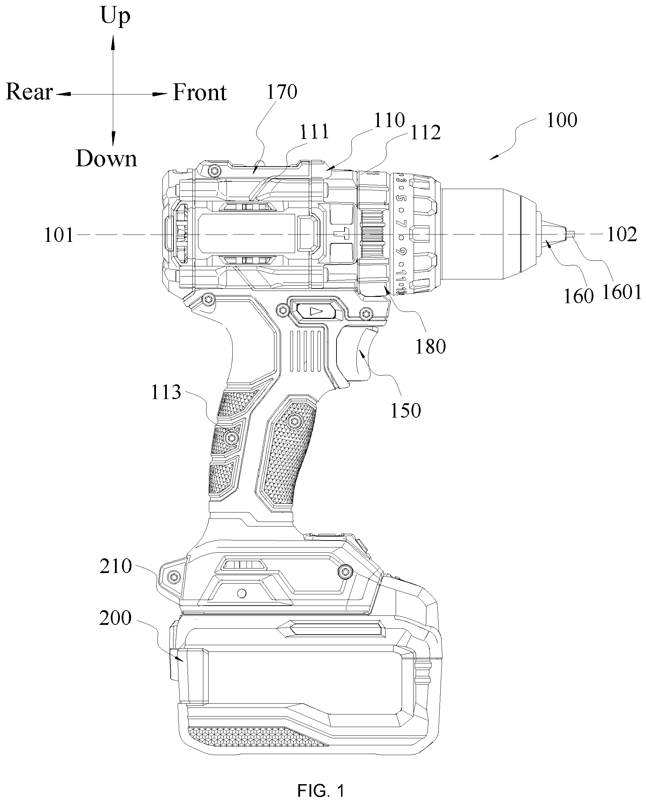

As shown in FIG. 1, the present application provides a handheld power tool 100. In this example, the handheld power tool 100 may be an electric drill. The handheld power tool 100 includes a power supply device 200. The power supply device 200 is used for supplying electrical energy to the handheld power tool 100. In this example, the power supply device 200 may be a battery pack, and the battery pack mates with a corresponding power supply circuit to power corresponding components in the handheld power tool 100. It is to be understood by those skilled in the art that the power supply device 200 is not limited to the scenario where the battery pack is used, and the corresponding components in the handheld power tool 100 may be powered through mains power or an alternating current (AC) power supply in conjunction with corresponding rectifier, filter, and voltage regulator circuits. For the convenience of the subsequent description, a battery pack 200 is used in the present application to represent the power supply device 200.

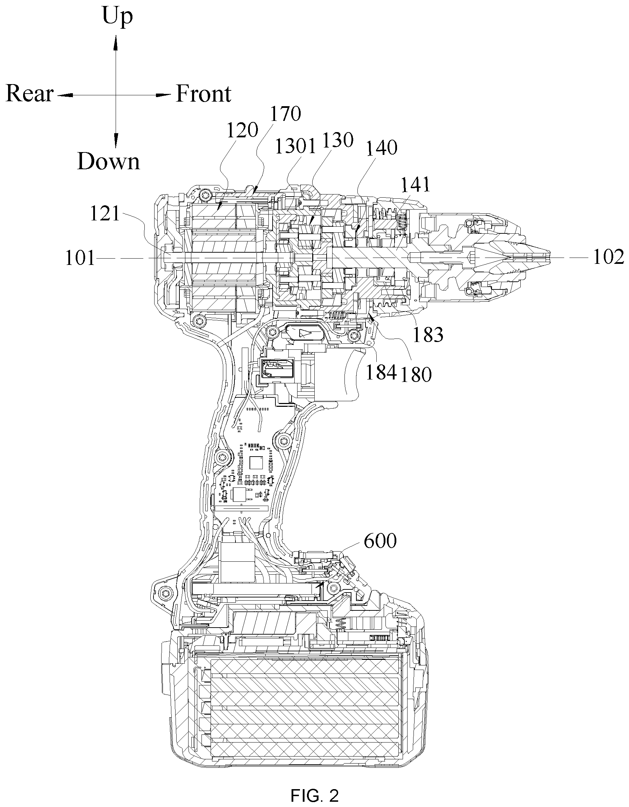

As shown in FIGS. 1 and 2, the handheld power tool 100 includes a housing 110, an electric motor 120, a transmission mechanism 130, and an output mechanism 140. The electric motor 120 includes a stator and a rotor. The housing 110 includes a motor housing 111 for accommodating the electric motor 120 and an output housing 112 for accommodating at least part of the output mechanism 140. The output housing 112 is connected to the front end of the motor housing 111. The housing 110 is further formed with or connected to a grip 113 for a user to operate. The grip 113 and the motor housing 111 form a T-shaped or L-shaped structure, facilitating the grip and operation of the user. In some examples, the grip 113 and the motor housing 111 form a straight cylindrical structure. The housing 110 is formed with or connected to a battery pack interface 210 for mounting the battery pack 200. The battery pack interface 210 is disposed at an end of the grip 113, and the battery pack 200 supplies power to the handheld power tool 100 via the battery pack interface 210. In this example, the battery pack 200 is detachably connected to the grip 113. In some alternative examples, the battery pack 200 is disposed in the housing.

The handheld power tool 100 further includes a main switch 150 mounted on the grip 113. When holding the grip 113, the user can trigger the main switch 150 relatively conveniently. The main switch 150 may be configured to be a switch for activating the handheld power tool 100.

The electric motor 120, the transmission mechanism 130, and the output mechanism 140 are arranged in sequence in the motor housing 111 and the output housing 112 from the rear to the front along the front and rear direction. The electric motor 120 includes the motor shaft 121 rotatable about a drive axis 101.

The output mechanism 140 is used for receiving torque supplied by the electric motor 120 and outputting torque. The output mechanism 140 includes an output shaft 141 for connecting and mounting a working head 1601 and driving the working head 1601 to rotate. The electric motor 120 drives the output shaft 141 to rotate about an output axis 102. The electric motor 120 drives the working head 1601 to rotate via the transmission mechanism 130 and the output shaft 141. A clamping mechanism 160 or a receiving portion is disposed at the front end of the output shaft 141 and may clamp the corresponding working head 1601, such as a screwdriver bit, a drill bit, or a sleeve, when different functions are implemented.

The output shaft 141 is used for outputting torque and rotates about the output axis 102. In this example, the output axis 102 coincides with the drive axis 101. In other alternative examples, an included angle of a certain degree is formed between the output axis 102 and the drive axis 101. In other alternative examples, the output axis 102 and the drive axis 101 are parallel to each other but do not coincide with each other.

The transmission mechanism 130 is disposed between the electric motor 120 and the output mechanism 140 and used for transmitting power between the electric motor 120 and the output mechanism 140. The transmission mechanism 130 is specifically disposed between the rotor of the electric motor 120 and the output shaft 141 of the output mechanism 140.

The transmission mechanism 130 includes a multi-stage transmission group. In this example, the multi-stage transmission group is a multi-stage planetary transmission group 300. The planetary transmission group includes a planet gear, a planet carrier for mounting the planet gear, and an inner ring gear meshing with the planet gear. The gear ratio of at least one of the multiple stages of planetary transmission groups 300 is adjustable, and the output gear ratio of the multi-stage planetary transmission group 300 is greater than 1. The planet carrier in a planetary transmission group closer to the output mechanism 140 in the multi-stage planetary transmission group 300 is formed on or connected to the output shaft 141. In this example, the inner ring gear of at least one of the multiple stages of planetary transmission groups is configured to move between a first position and a second position. The multi-stage planetary transmission group is provided and then the rotational speed and torque are adjusted by adjusting the gear ratios of the planet gears, which is equivalent to providing a mechanical manner to adjust the rotational speed and torque. In this example, the gear ratios of the planetary transmission groups are adjustable, that is to say, the planetary transmission groups have at least two different gear ratios, where one gear ratio corresponds to the first speed gear of the handheld power tool 100, the other gear ratio corresponds to the second speed gear of the handheld power tool 100, the first speed gear is a high speed gear, and the second speed gear is a low speed gear.

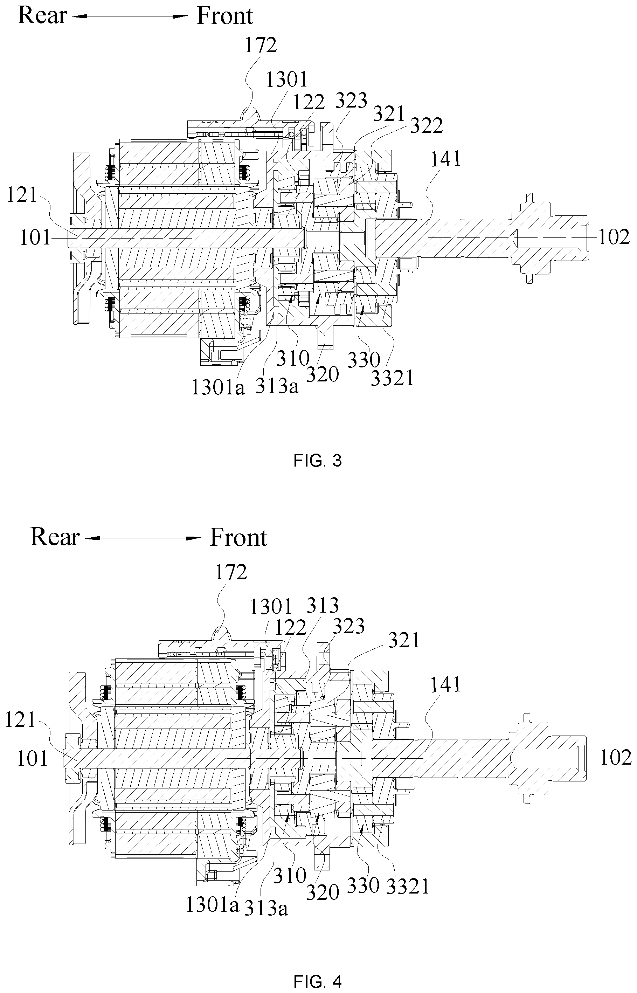

In some examples, the transmission mechanism 130 has two transmission states in which the output shaft 141 outputs different rotational speeds. As shown in FIGS. 2 and 3, the transmission mechanism 130 includes a housing assembly 1301, and the multi-stage planetary transmission group 300 includes a first-stage planetary gearset 310, a second-stage planetary gearset 320, and a third-stage planetary gearset 330.

As shown in FIGS. 3 and 4, the first-stage planetary gearset 310 and the second-stage planetary gearset 320 are at least partially located in the housing assembly 1301. The first-stage planetary gearset 310 is close to the motor shaft 121, and the third-stage planetary gearset 330 is close to the output shaft 141. Optionally, the first-stage planetary gearset 310 and the third-stage planetary gearset 330 output only one gear ratio. That is, the gear ratio of each of the first-stage planetary gearset 310 and the third-stage planetary gearset 330 is greater than 1. That is to say, the first-stage planetary gearset 310 and the third-stage planetary gearset 330 perform a deceleration and torque increase operation, where the output rotational speed of the planetary gearset is less than the input rotational speed of the planetary gearset, and the output torque of the planetary gearset is greater than the input torque of the planetary gearset.

The first-stage planetary gearset 310 includes first planet gears 311, a first planet carrier 312 for mounting the first planet gears 311, and a first inner ring gear 313 meshing with the first planet gears 311. A first sun gear 122 is formed on or connected to the motor shaft 121. Optionally, the first sun gear 122 and the motor shaft 121 rotate coaxially. Specifically, the first sun gear 122 rotates about the drive axis 101. Optionally, the first sun gear 122 is connected to the motor shaft 121. Optionally, as shown in FIGS. 3 and 4, the housing assembly 1301 includes at least one protrusion 1301a, and the first inner ring gear 313 includes at least one groove 313a matching the protrusion 1301a. By providing the protrusion 1301a and the groove 313a, the first inner ring gear 313 can be fixed in the housing assembly 1301, that is, the first-stage planetary gearset 310 can be fixed in the housing assembly 1301.

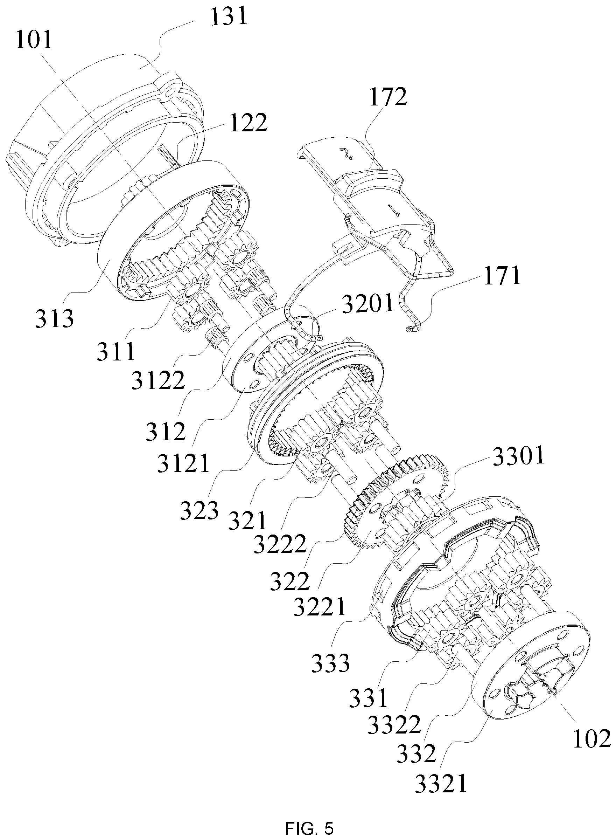

The first sun gear 122 drives the first planet gears 311. The first planet gears 311 are configured to mesh with the first sun gear 122. Multiple first planet gears 311 are provided, and the multiple first planet gears 311 are configured to mesh with the first sun gear 122. In some examples, as shown in FIG. 5, four first planet gears 311 are evenly arranged along the circumferential direction of the drive axis 101. The first sun gear 122 and the first planet gears 311 are formed with a meshing tooth portion for transmitting power. Since the gear ratio corresponding to the first-stage planetary gearset 310 is greater than 1, the number of the meshing teeth of the first-stage planetary gearset 310 is greater than the number of teeth of the meshing tooth portion of the first sun gear 122. The first inner ring gear 313 meshes with the periphery of the multiple first planet gears 311. The first planet carrier 312 includes a first drive disc 3121, a first support frame 3122, and a first output portion. The first support frame 3122 and the first output portion are formed on two sides of the first drive disc 3121, respectively, and the first output portion rotates synchronously with the first drive disc 3121. The first support frame 3122 is inserted into the first planet gears 311 and rotatably connected to the first planet gears 311 so that the first planet gears 311 can drive the first planet carrier 312 to rotate about the drive axis 101. Meshing teeth are formed on the circumferential side of the first output portion, and the first output portion is used for meshing with the second-stage planetary gearset 320 so that the first-stage planetary gearset 310 and the second-stage planetary gearset 320 are drivingly connected. Optionally, the first output portion is a second sun gear 3201 in the second-stage planetary gearset 320.

The second-stage planetary gearset 320 includes second planet gears 321, a second planet carrier 322 for mounting the second planet gears 321, and a second inner ring gear 323 meshing with the second planet gears 321. The second sun gear 3201 drives the second planet gears 321. Optionally, the second sun gear 3201 and the motor shaft 121 rotate coaxially. Specifically, the second sun gear 3201 rotates about the drive axis 101. The second planet gears 321 are configured to mesh with the second sun gear 3201. Multiple second planet gears 321 are provided, and the multiple second planet gears 321 are configured to mesh with the second sun gear 3201. In this example, as shown in FIG. 5, four second planet gears 321 are evenly arranged along the circumferential direction of the drive axis 101. A meshing relationship between the second planet gears 321, the second planet carrier 322, and the second inner ring gear 323 is the same as the meshing relationship in the first-stage planetary gearset 310 and is well-known to those skilled in the art. The details are not repeated here. The outer circumference of the second planet carrier 322 is provided with gears mating with the second inner ring gear 323 so that the second-stage planetary gearset 320 can switch between a transmission state and a speed change state. The transmission state and the speed change state correspond to the first position and the second position of the second-stage planetary gearset 320, respectively.

The second planet carrier 322 includes a second drive disc 3221, a second support frame 3222, and a second output portion. The connection between the second output portion and the middle of the second drive disc 3221 is a snap-fit connection. The second support frame 3222 and the second output portion are formed on two sides of the second drive disc 3221, respectively, and the second output portion rotates synchronously with the second drive disc 3221. The second support frame 3222 is inserted into the second planet gears 321 and rotatably connected to the second planet gears 321 so that the second planet gears 321 can drive the second planet carrier 322 to rotate about the drive axis 101. Meshing teeth are formed on the circumferential side of the second output portion, and the second output portion is used for meshing with the third-stage planetary gearset 330 so that the second-stage planetary gearset 320 and the third-stage planetary gearset 330 are drivingly connected. Optionally, the second output portion is a third sun gear 3301 in the third-stage planetary gearset 330.

The third-stage planetary gearset 330 includes third planet gears 331, a third planet carrier 332 for mounting the third planet gears 331, and a third inner ring gear 333 meshing with the third planet gears 331. The third sun gear 3301 drives the third planet gears 331. Optionally, the third sun gear 3301 and the motor shaft 121 rotate coaxially. Specifically, the third sun gear 3301 rotates about the drive axis 101. The third planet gears 331 are configured to mesh with the third sun gear 3301. Multiple third planet gears 331 are provided, and the multiple third planet gears 331 are configured to mesh with the third sun gear 3301. In this example, as shown in FIG. 5, six third planet gears 331 are evenly arranged along the circumferential direction of the drive axis 101. A meshing relationship between the third planet gears 331, the third planet carrier 332, and the third inner ring gear 333 is the same as the meshing relationship in the first-stage planetary gearset 310 and is well-known to those skilled in the art. The details are not repeated here.

The third planet carrier 332 includes a third drive disc 3321 and a third support frame 3322. The third support frame 3322 is inserted into the third planet gears 331 and rotatably connected to the third planet gears 331 so that the third planet gears 331 can drive the third drive disc 3321 to rotate about the drive axis 101.

Optionally, as shown in FIGS. 3 and 4, the third drive disc 3321 is formed at the rear end of the output shaft 141. The third planet gears 331 drive, through the third planet carrier 332, the output shaft 141 to rotate. Optionally, the third drive disc 3321 and the output shaft 141 may be independent components, and the third drive disc 3321 is connected to the output shaft 141, as long as the third planet carrier 332 can drive the output shaft 141 to rotate.

As shown in FIGS. 1 and 2, the handheld power tool 100 further includes a switching mechanism 170 for driving the transmission mechanism 130 to switch between different transmission states. The switching mechanism 170 includes an operating member 172 for the user to operate. As shown in FIG. 3 to 6, the switching mechanism 170 includes a shift fork. The operating member 172 drives the shift fork to move. Optionally, the shift fork includes a first shift fork 171 for driving the second inner ring gear 323, and the first shift fork 171 is connected to the second inner ring gear 323.

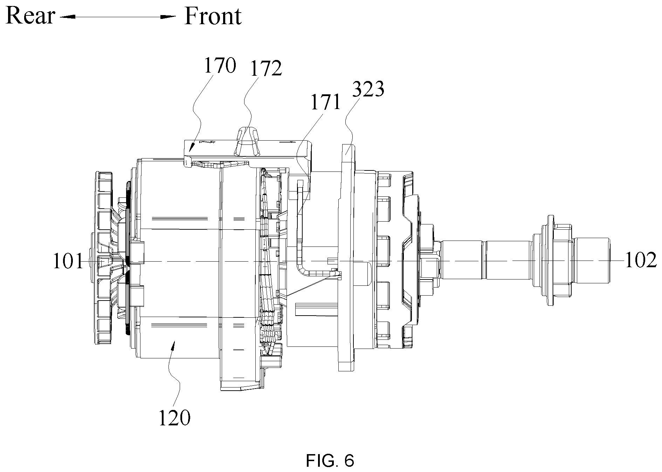

The second-stage planetary gearset 320 is required to be in the transmission state, that is, the second-stage planetary gearset 320 does not perform a deceleration operation, which corresponds to the first speed gear of the handheld power tool 100, which is the high speed gear. As shown in FIGS. 3 and 6, the first shift fork 171 is operated to drive the second inner ring gear 323 to move forward along the drive axis 101, specifically, to move toward the third planet carrier 330, until the second inner ring gear 323 is snap-fit with both the second planet gears 321 and the second planet carrier 322, and the second inner ring gear 323 is not fixed in the housing assembly 1301. In this manner, the second inner ring gear 323 meshes with the meshing teeth of the second planet gears 321 and the second planet carrier 322 and rotates synchronously with the second planet gears 321 and the second planet carrier 322. This is equivalent to rotating the second inner ring gear 323 synchronously with the second sun gear 3201 and the second planet carrier 322, no deceleration process exists, and the gear ratio of the second-stage planetary gearset 320 is 1.

The second-stage planetary gearset 320 is required to be in the speed change state, that is, the second-stage planetary gearset 320 performs a deceleration operation, which corresponds to the second speed gear of the handheld power tool 100, which is the low speed gear. As shown in FIGS. 4 and 6, the first shift fork 171 is operated to drive the second inner ring gear 323 to move backward along the drive axis 101, specifically, to move toward the first planet carrier 310. The second inner ring gear 323 is snap-fit with the first inner ring gear 313. Since the first inner ring gear 313 is fixed on the housing assembly 1301 in a snap-fit manner and cannot rotate, the second inner ring gear 323 cannot rotate in this case. Therefore, the rotation of the second planet gears 321 does not drive the second inner ring gear 323 to rotate, and the second sun gear 3201 rotates to drive the second planet gears 321 to rotate so that the second planetary gearset 320 performs a deceleration operation, and the gear ratio of the second-stage planetary gearset 320 is greater than 1.

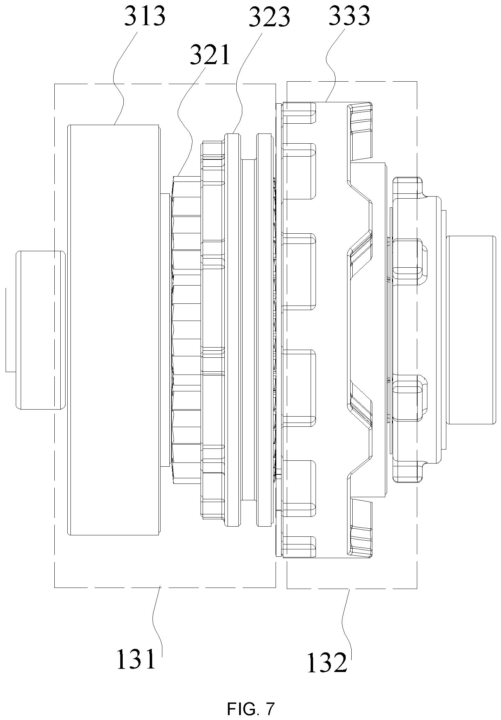

In some examples, FIG. 7 is a schematic view of the handheld power tool 100 in the high speed gear corresponding to FIG. 3. As shown in FIG. 7, when the handheld power tool 100 is in the high speed gear, that is, the second-stage planetary gearset 320 is in the transmission state, the transmission mechanism 130 is a two-stage deceleration mechanism and includes a first-stage deceleration mechanism 131 and a second-stage deceleration mechanism 132. The first-stage deceleration mechanism 131 includes the first-stage planetary gearset 310, the first sun gear 122, the second-stage planetary gearset 320, and the second sun gear 3201, and the second-stage deceleration mechanism 132 includes the third-stage planetary gearset 330 and the third sun gear 3301. In this case, the gear ratio of the first-stage deceleration mechanism 131 is the gear ratio of the first-stage planetary gearset 310, and the gear ratio of the second-stage deceleration mechanism 132 is the gear ratio of the third-stage planetary gearset 330. In this case, the rotational speed of the electric motor 120 is reduced twice before the working head 1601 is driven to rotate.

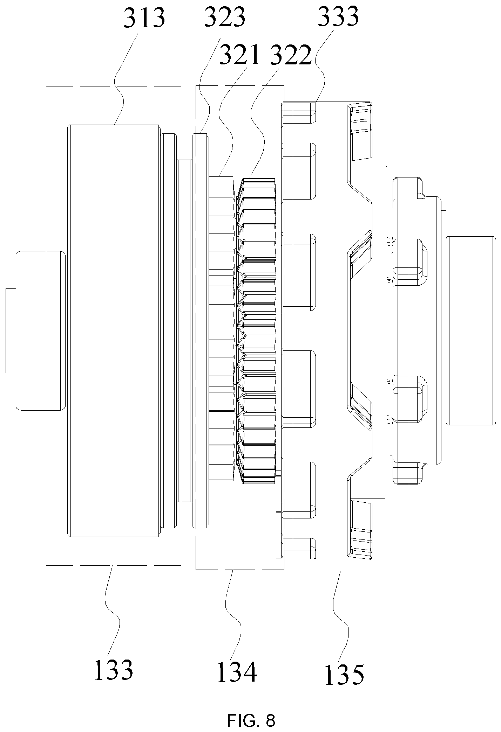

In some examples, FIG. 8 is a schematic view of the handheld power tool 100 in the low speed gear corresponding to FIG. 4. As shown in FIG. 8, when the handheld power tool 100 is in the low speed gear, that is, the second-stage planetary gearset 320 is in the speed change state, the transmission mechanism 130 is a three-stage deceleration mechanism and includes a first-stage deceleration mechanism 133, a second-stage deceleration mechanism 134, and a third-stage deceleration mechanism 135. The first-stage deceleration mechanism 133 includes the first-stage planetary gearset 310 and the first sun gear 122, the second-stage deceleration mechanism 134 includes the second-stage planetary gearset 320 and the second sun gear 3201, and the third-stage deceleration mechanism 135 includes the third-stage planetary gearset 330 and the third sun gear 3301. In this case, the gear ratio of the first-stage deceleration mechanism 133 is the gear ratio of the first-stage planetary gearset 310, the gear ratio of the second-stage deceleration mechanism 134 is the gear ratio of the second-stage planetary gearset 320, and the gear ratio of the third-stage deceleration mechanism 135 is the gear ratio of the third-stage planetary gearset 330. In this case, the rotational speed of the electric motor 120 is reduced three times before the working head 1601 is driven to rotate.

In some examples, the low speed ratio of the transmission mechanism 130 is less than or equal to 15, and the high speed ratio of the transmission mechanism is greater than or equal to 45. The low speed ratio and high speed ratio of the transmission mechanism 130 are achieved through the multi-stage planetary transmission group 300 and corresponding sun gears. The speed ratio of the transmission mechanism 130 refers to the ratio of the rotational speed of the electric motor 120 to the rotational speed of the working head 1601. The low speed ratio corresponds to the ratio of the rotational speed of the electric motor 120 to the rotational speed of the working head 1601 when the handheld power tool 100 is in the high speed gear, and the transmission mechanism 130 is the two-stage deceleration mechanism. The high speed ratio corresponds to the ratio of the rotational speed of the electric motor 120 to the rotational speed of the working head 1601 when the handheld power tool 100 is in the low speed gear, and the transmission mechanism 130 is the three-stage deceleration mechanism. That is, when the rotational speed of the electric motor 120 remains unchanged, the rotational speed of the working head 1601 corresponding to the low speed ratio is higher, and the rotational speed of the working head 1601 corresponding to the high speed ratio is lower. Optionally, the low speed ratio of the transmission mechanism 130 may be 12.32. Optionally, the low speed ratio of the transmission mechanism 130 may be 13. Optionally, the high speed ratio of the transmission mechanism 130 may be 51.

In some examples, for example, when the low speed ratio of the transmission mechanism 130 is 12.32, the handheld power tool 100 is in the high speed gear. The rotational speed of the electric motor 120 is set to 28000 rpm, and then the corresponding rotational speed of the working head 1601 is about 2272 rpm.

In some examples, the diameter of the electric motor 120 is greater than 50 mm. That is, the electric motor 120 in the present application has a relatively large dimension, and when the electric motor 120 is unloaded, the rotational speed of the electric motor 120 (that is, the maximum rotational speed of the electric motor 120) is not relatively large. However, when the electric motor with a relatively large dimension is loaded, the rotational speed does not decrease rapidly. Optionally, when the torque of the handheld power tool 100 is greater than or equal to 6 N·m and less than or equal to 8 N·m, due to the relatively large dimension of the electric motor 120, the rotational speed does not decrease rapidly so that the rotational speed of the handheld power tool 100 can be maintained at 2000 rpm.

In some examples, the battery pack 200 is a pouch battery pack, and the voltage of the battery pack 200 is greater than or equal to 20 V. Optionally, the voltage of the battery pack 200 is 24 V. Since the battery pack 200 is a pouch battery pack, the battery pack 200 has small internal resistance, a small voltage drop, and a strong discharge capacity.

In some examples, due to the relatively large dimension of the electric motor 120, the maximum rotational speed is not too large, and the low speed ratio of the transmission mechanism 130 is limited by the multi-stage planetary transmission group 300 and corresponding sun gears. To make the rotational speed outputted by the working head 1601 of the handheld power tool 100 higher, FOC field-weakening control is performed on the electric motor 120 to increase the maximum rotational speed of the electric motor 120. Specifically, a controller 420 performs FOC field-weakening control on the electric motor 120.

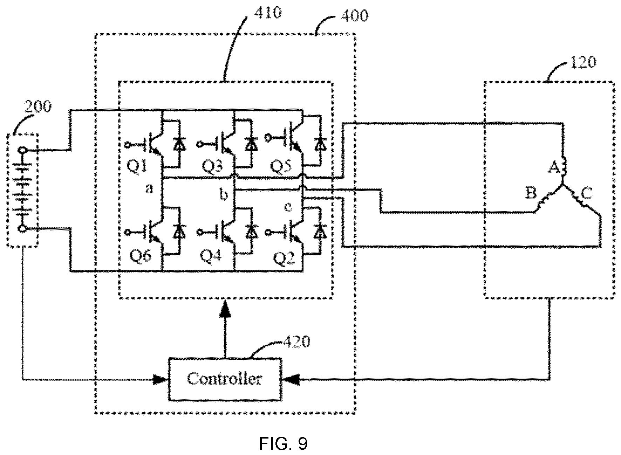

Referring to a circuit block diagram of the handheld power tool 100 shown in FIG. 9, a driving system of the electric motor 120 may include at least a power supply 200 (that is, the battery pack 200) and a control circuit 400, where the control circuit 400 may include a driver circuit 410 and a controller 420.

In this example, the electric motor 120 is a brushless inrunner. In other alternative examples, the electric motor 120 is a brushless outrunner. In this example, the brushless motor is configured to be a three-phase brushless motor. It is to be understood that the electric motor is not limited to the three-phase brushless motor and may be a direct current (DC) motor of another type. The above does not affect the substance of the present application. The electric motor 120 may include at least three-phase stator windings A, B, and C which may adopt a star connection or a delta connection.

The driver circuit 410 is electrically connected to the stator windings A, B, and C of the electric motor 120 and configured to transmit the current from the battery pack 200 to the stator windings A, B, and C to drive the electric motor 120 to rotate. In an example, the driver circuit 410 includes multiple switching elements Q1, Q2, Q3, Q4, Q5, and Q6 which are disposed on a current path from the battery pack 200 to the electric motor 120. Q1, Q3, and Q5 are high-side switching elements, and Q2, Q4, and Q6 are low-side switching elements. Any phase of stator winding of the electric motor 120 is connected to one high-side switching element and one low-side switching element.

A gate terminal of each switching element in the driver circuit 410 is electrically connected to the controller 420 and configured to receive a control signal from the controller 420, where the control signal may be a pulse-width modulation (PWM) signal. The controller 420 may output the control signals to control the switching elements in the driver circuit 410 to be turned on to adjust power supply from the battery pack 200 to the electric motor 120. A drain or source of each switching element is connected to the stator winding A, B, or C of the electric motor 120. The switching elements Q1 to Q6 receive control signals from the controller 420 to change their respective on states, thereby changing the current loaded to the stator windings A, B, and C of the electric motor 120 by the power supply 200. In an example, the driver circuit 410 may be a three-phase bridge driver circuit including six controllable semiconductor power devices (such as field-effect transistors (FETs), bipolar junction transistors (BJTs), or insulated-gate bipolar transistors (IGBTs)). It is to be understood that the preceding switching elements may be any other types of solid-state switches, such as the IGBTs or the BJTs.

As shown in FIG. 9, to drive the electric motor 120 to rotate, the driver circuit 410 has multiple driving states, and in different driving states, the electric motor 120 may have different rotational speeds or different directions of rotation. In the present application, the process is not described in detail in which the controller 420 controls the driver circuit 410 to change different driving states such that the electric motor 120 has different rotational speeds or different directions of rotation.

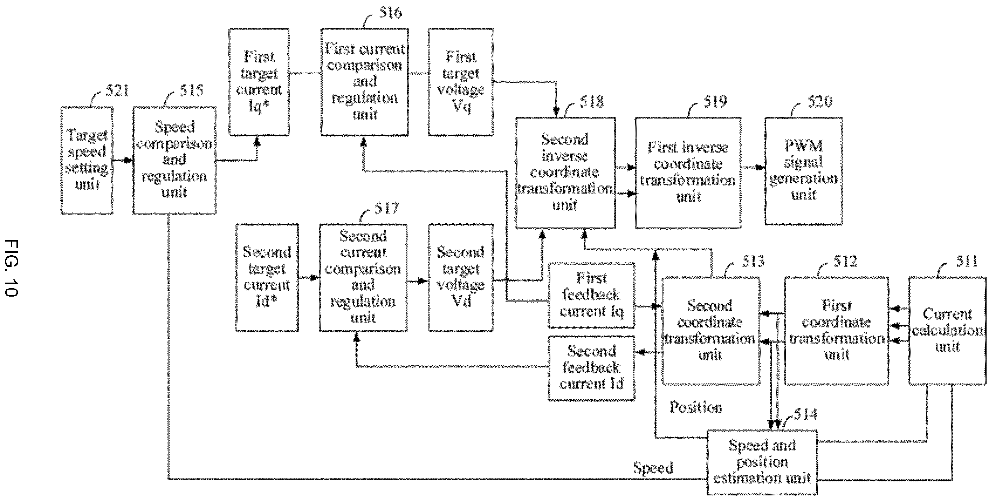

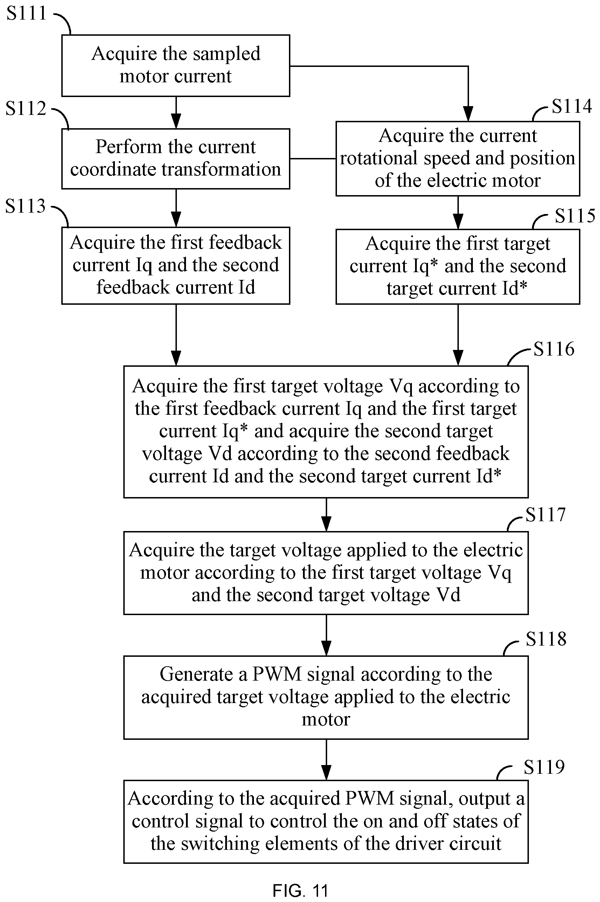

In conjunction with FIGS. 10 and 11, the process in which the controller 420 performs FOC field-weakening control on the electric motor 120 includes the steps below.

In S111, the sampled motor current and the target speed of the electric motor are acquired.

The controller 420 acquires a sampled motor current signal of the electric motor 120, and the sampled current may be a bus current or a phase current. After acquiring the sampled motor current signal, the controller 420 obtains the sampled motor current through calculation. Specifically, the current three-phase current of the electric motor 120 is calculated by a current calculation unit 511. The target speed of the electric motor 120 is obtained from a target speed setting unit 521, and the value of the target speed is operably set by the user.

In S112, the current coordinate transformation is performed.

After calculating the three-phase current, the current calculation unit 511 transmits the three-phase current to a coordinate transformation unit to perform current coordinate transformation, thereby obtaining the first feedback current Iq and the second feedback current Id.

Optionally, the coordinate transformation unit includes a first coordinate transformation unit 512 for transforming the three-phase alternating currents calculated by the current calculation unit 511 into two-phase alternating currents and a second coordinate transformation unit 513 for transforming the two-phase alternating currents obtained by the transformation of the first coordinate transformation unit 512 into two-phase direct currents, and the two-phase direct currents are the first feedback current Iq and the second feedback current Id.

Optionally, the first coordinate transformation unit 512 adopts the Clarke transform, and the second coordinate transformation unit 513 adopts the Park transform.

In S113, the first feedback current Iq and the second feedback current Id are acquired.

Through the coordinate transformation unit, the controller 420 can obtain two feedback currents, which are the first feedback current Iq and the second feedback current Id. The first feedback current Iq and the second feedback current Id are perpendicular to each other. In this manner, a signal processing module in the controller 420 obtains the first feedback current Iq and the second feedback current Id according to the sampled current of the electric motor 120, where the first feedback current Iq is the torque current and related to the torque of the electric motor, and the second feedback current Id is the excitation current and related to the stator magnetic field strength.

In S114, the current speed and position of the electric motor are acquired.

A speed and position estimation unit 514 acquires the current speed ω and/or rotor position of the electric motor 120 through calculation according to the acquired sampled motor current and some parameters obtained in the coordinate transformation process.

In S115, the first target current Iq* and the second target current Id* are acquired.

The first target current Iq* and the second target current Id* may be determined by calculation or may be directly set. The first target current Iq* is the excitation current for controlling torque and generating torque perpendicular to the rotor to drive the rotor to rotate to the maximum extent. The second target current Id* is the torque current for controlling the magnetic field strength.

In some examples, the first target current Iq* is acquired as follows: a speed comparison and regulation unit 515 compares the acquired current speed ω of the electric motor with the set target speed w* and regulates the speed to generate the first target current Iq*. The first target current Iq* can be used for controlling the speed of the electric motor to reach the target speed w* as quickly and stably as possible. The principle is to use the torque current to control the torque so that the torque can drive the rotor to rotate to the maximum extent. Optionally, the speed comparison and regulation unit 515 includes a proportional-integral (PI) regulator. According to the comparison result between the current speed ω and the target speed w* of the electric motor 120, the speed comparison and regulation unit 515 adopts a PI regulation manner to regulate the speed to obtain the first target current Iq*.

The first target current Iq* can control the torque, and the second target current Id* can control the magnetic field strength. To improve the overall efficiency and torque, the first target current Iq* needs to be as large as possible. The first target current Iq* and the second target current Id* are actually obtained by decoupling the actual current of the electric motor. If the first target current Iq* is to be as large as possible, the second target current Id* should be as small as possible. Therefore, Id* = 0.

In S116, the first target voltage Vq and the second target voltage Vd are acquired.

A first current comparison and regulation unit 516 acquires the first target voltage Vq according to the first feedback current Iq and the first target current Iq*. Optionally, the first current comparison and regulation unit 516 includes a PI regulator. According to the comparison result between the first feedback current Iq and the first target current Iq*, the first current comparison and regulation unit 516 adopts a PI regulation manner to regulate the current to generate the first target voltage Vq. The first target voltage Vq can enable the first feedback current Iq of the electric motor to reach the first target current Iq* as quickly and stably as possible, and the first target current Iq* can be used for controlling the speed of the electric motor to reach the target speed w* as quickly and stably as possible.

A second current comparison and regulation unit 517 acquires the second target voltage Vd according to the second feedback current Id and the second target current Id*. The second target current Id* is equal to 0. Optionally, according to the comparison result between the second feedback current Id and the second target current Id*, the second current comparison and regulation unit 517 adopts a PI regulation manner to regulate the current to generate the second target voltage Vd. The second target voltage Vd can enable the second feedback current Id of the electric motor to reach the second target current Id* as quickly and stably as possible.

In S117, the target voltage applied to the electric motor is acquired according to the first target voltage Vq and the second target voltage Vd.

The target voltage applied to the electric motor is obtained by performing the coordinate transformation on the acquired first target voltage Vq and second target voltage Vd.

Specifically, a second inverse coordinate transformation unit 518 transforms the acquired first target voltage Vq and second target voltage Vd from two-phase DC voltages to two-phase AC voltages. Specifically, the second inverse coordinate transformation unit 518 adopts the inverse Park transform to convert the acquired first target voltage Vq and second target voltage Vd from two-phase DC voltages to two-phase AC voltages Va and Vb.

Further, a first inverse coordinate transformation unit 519 transforms the two-phase AC voltages Va and Vb obtained by the second inverse coordinate transformation unit 518 from two-phase AC voltages into three-phase AC voltages. The three-phase AC voltage is the target voltage applied to the electric motor, and the waveform of the target voltage is approximately a sine wave or a saddle wave.

In S118, a PWM signal is generated according to the acquired target voltage applied to the electric motor, thereby controlling the driver circuit.

A PWM signal generation unit 520 generates the PWM signal according to the acquired target voltage applied to the electric motor 120, and the PWM signal is used for controlling the on and off states of the corresponding switching elements of the driver circuit 410.

In S119, according to the acquired PWM signal, a control signal is outputted to control the on and off states of the switching elements of the driver circuit.

The PWM signal generated by the PWM signal generation unit 520 is transmitted to a power drive module in the controller 420. The power drive module improves the driving capability of the PWM signal. The control signal with an improved driving capability is outputted to the control terminal of each switching element of the driver circuit 410, thereby controlling the on and off states of each switching element. The on and off states of each switching element and the time for which each switching element is on or off can control the voltage outputted from the battery pack 200 to the electric motor. The waveform of the voltage is approximately a sine wave or a saddle wave, thereby enabling the electric motor 120 to operate according to the control manner of the controller 420.

In such a control manner, the waveform of the voltage inputted to the electric motor 120 is approximately a sine wave or a saddle wave, and the rotational speed of the electric motor 120 can be greatly increased so that the rotational speed of the electric motor 120 can be increased beyond the maximum rotational speed.

In some examples, the maximum rotational speed of the electric motor 120 can be increased to a value less than or equal to 40000 rpm through FOC field-weakening control so that when the low speed ratio of the transmission mechanism 130 is less than or equal to 15, the maximum rotational speed of the working head 1601 can be greater than or equal to 2800 rpm.

In some examples, for example, if the rotational speed of the electric motor 120 is 40000 rpm and the low speed ratio of the transmission mechanism 130 is 14.28, then the corresponding maximum rotational speed of the working head 1601 is about 2800 rpm. In some examples, for example, if the rotational speed of the electric motor 120 is 40000 rpm and the low speed ratio of the transmission mechanism 130 is 12.32, then the corresponding maximum rotational speed of the working head 1601 is about 3250 rpm.

Therefore, in conjunction with the electronic speed regulation manner of changing the rotational speed of the electric motor 120 and adjusting the gear ratio of the multi-stage planetary transmission group 300, the rotational speed of the working head 1601 can be adjusted. In this manner, in the handheld power tool 100 with the transmission mechanism 130 having the two-stage deceleration mechanism, that is, a dual-speed electric drill, the maximum rotational speed of the working head 1601 is greater than or equal to 2800 rpm so that the rotational speed of the dual-speed electric drill can be greatly improved, thereby improving the working efficiency of the dual-speed electric drill and improving the user experience.

As shown in FIGS. 1 and 2, the handheld power tool 100 further includes an actuator sleeve 180 operable by the user to rotate about the output shaft 141 to set the working mode of the handheld power tool 100. Optionally, when the handheld power tool 100 is an impact drill, the actuator sleeve 180 is a mode adjustment ring operable by the user to rotate about the output shaft 141 to set the working mode of the handheld power tool 100, and the working mode includes a drill gear, a hammer gear, and a screw gear. Optionally, when the handheld power tool 100 is an electric drill, the actuator sleeve 180 is a torque ring operable by the user to rotate about the output shaft 141 to set the torque of the handheld power tool 100, the working mode is the drill gear when the torque is at its maximum, and the working mode is the screw gear when the torque is not at its maximum. When the handheld power tool 100 is the impact drill or electric drill, the impact drill or electric drill is the dual-speed electric drill described above in the present application. In the present application, the case where the actuator sleeve 180 is the mode adjustment ring, that is, the handheld power tool 100 is the impact drill, is used as an example for the specific description.

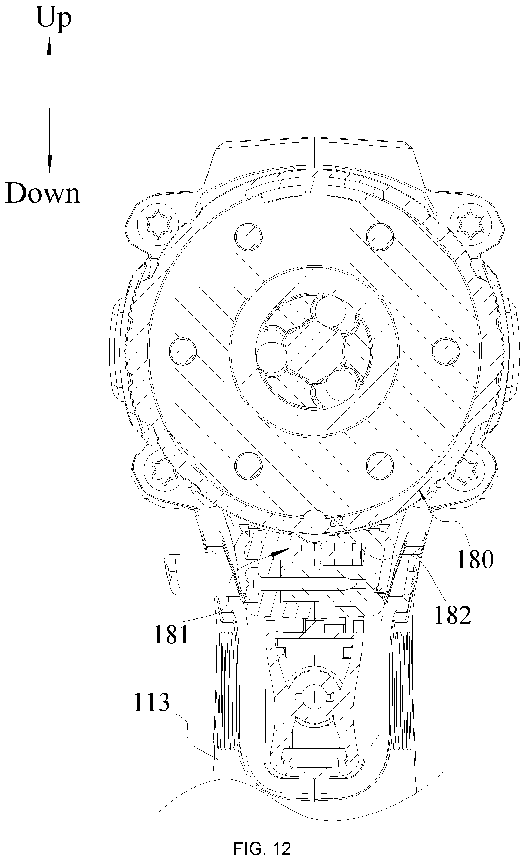

As shown in FIG. 12, the handheld power tool 100 further includes a detection element 181 disposed below the actuator sleeve 180 and used for detecting the rotational state of the actuator sleeve 180. The handheld power tool 100 further includes the grip 113, and the detection element 181 is disposed on the upper portion of the grip 113. Specifically, the detection element 181 is disposed on the top of the grip 113.

The handheld power tool 100 includes the controller 420 disposed in the housing 110 (not shown in the figure), and the controller 420 is communicatively connected to the detection element 181 to acquire the rotational state of the actuator sleeve 180. In some examples, the controller 420 is configured to acquire the working mode of the handheld power tool 100 according to the rotational state of the actuator sleeve 180, set the rotational speed limit of the electric motor 120 according to the working mode of the handheld power tool 100, and control the electric motor 120 to operate at a speed not exceeding the rotational speed limit.

In some examples, the detection element 181 is a Hall element. In some examples, at least one magnet 182 is disposed on the inner side of the actuator sleeve 180, and the detection element 181 detects the rotational state of the actuator sleeve 180 by detecting the position of the magnet 182.

In some examples, when only one magnet 182 is provided on the inner side of the actuator sleeve 180, that the controller 420 acquires the working mode of the handheld power tool 100: when the handheld power tool 100 is the impact drill, the handheld power tool 100 includes three gears: the drill gear, the hammer gear, and the screw gear. In some examples, when the detection element 181 detects that the distance between the magnet 182 and the detection element 181 is less than a first preset distance, the controller 420 determines that the handheld power tool 100 is in the drill gear in this case. When the detection element 181 detects that the distance between the magnet 182 and the detection element 181 is greater than or equal to the first preset distance, the controller 420 determines that the handheld power tool 100 is in the hammer gear or the screw gear in this case. The first preset distance is determined according to the empirical value, and the first preset distance is greater than or equal to 0. For example, when the magnet 182 directly faces the detection element 181, the distance between the magnet 182 and the detection element 181 is less than the first preset distance, and the controller 420 determines that the handheld power tool 100 is in the drill gear in this case. Similarly, when the handheld power tool 100 is the electric drill, the handheld power tool 100 includes two gears: the drill gear and the screw gear. When the detection element 181 detects that the distance between the magnet 182 and the detection element 181 is less than the first preset distance, the controller 420 determines that the handheld power tool 100 is in the drill gear in this case. When the detection element 181 detects that the distance between the magnet 182 and the detection element 181 is greater than or equal to the first preset distance, the controller 420 determines that the handheld power tool 100 is in the screw gear in this case.

In some examples, when only two magnets 182 are provided on the inner side of the actuator sleeve 180, that the controller 420 acquires the working mode of the handheld power tool 100, including: when the handheld power tool 100 is the impact drill, the handheld power tool 100 includes three gears: the drill gear, the hammer gear, and the screw gear. In some examples, when the detection element 181 detects that the distance between any one of the two magnets 182 and the detection element 181 is less than a second preset distance, the controller 420 determines that the handheld power tool 100 is in the hammer gear or the screw gear in this case. When the detection element 181 detects that the distance between the magnet 182 and the detection element 181 is greater than or equal to the second preset distance, the controller 420 determines that the handheld power tool 100 is in the drill gear in this case. The manner in which the controller 420 determines whether the handheld power tool 100 is in the drill gear or the screw gear when the handheld power tool 100 is the electric drill is similar to the manner when the handheld power tool 100 is the impact drill. The details are not repeated here. The second preset distance is determined according to the empirical value, and the second preset distance is greater than or equal to 0.

In some examples, the rotational speed limit of the drill gear is higher than the rotational speed limit of the hammer gear and the rotational speed limit of the screw gear. As shown in FIG. 2, the handheld power tool 100 further includes an impact teeth 183 and a gear slipping gasket 184. When the handheld power tool 100 is in the hammer gear, the impact teeth 183 is impacted. If the rotational speed of the electric motor 120 is too high, the wear of the impact teeth 183 is accelerated. When the handheld power tool 100 is in the screw gear, there is a probability that gear slipping occurs. If the rotational speed of the electric motor 120 is too high, the high-frequency vibration may easily cause the gear slipping gasket 184 to break. Therefore, the rotational speed of the electric motor 120 in the hammer gear and the screw gear needs to be further limited, thereby extending the service life of the handheld power tool 100.

In some examples, the rotational speed limit of the electric motor 120 in the drill gear is set to V1, that is, the maximum rotational speed of the electric motor 120 in the drill gear is V1; and the rotational speed limit of the electric motor 120 in the hammer gear and the screw gear is set to V2, that is, the maximum rotational speed of the electric motor 120 in the hammer gear or the screw gear is V2. V2 is less than V1. Since the maximum rotational speed of the electric motor 120 is less than or equal to 40000 rpm through FOC field-weakening control, V1 is less than or equal to 40000 rpm.

In some examples, when the controller 420 determines that the working mode of the handheld power tool 100 is the drill gear, the controller 420 controls the maximum rotational speed of the electric motor 120 to be V1. Optionally, the controller 420 may increase the rotational speed of the electric motor 120 to V1 through FOC field-weakening control. Optionally, the controller 420 may increase the rotational speed of the electric motor 120 to V1 by increasing the duty cycle of the electric motor 120. Optionally, the controller 420 may increase the rotational speed of the electric motor 120 to V1 by increasing the conduction angle of the electric motor 120. In addition, the controller 420 may increase the rotational speed of the electric motor 120 in any other manner, which is not limited in the present application.

In some examples, when the controller 420 determines that the working mode of the handheld power tool 100 is the hammer gear or the screw gear, the controller 420 controls the maximum rotational speed of the electric motor 120 to be V2. When the handheld power tool 100 is switched from the drill gear to the hammer gear or the screw gear, the controller 420 needs to control the rotational speed of the electric motor 120 to decrease from V1 to V2. Optionally, the controller 420 may decrease the rotational speed of the electric motor 120 to V2 through FOC control. Optionally, the controller 420 may decrease the rotational speed of the electric motor 120 to V2 by decreasing the duty cycle of the electric motor 120. Optionally, the controller 420 may decrease the rotational speed of the electric motor 120 to V2 by decreasing the conduction angle of the electric motor 120. In addition, the controller 420 may decrease the rotational speed of the electric motor 120 in any other manner, which is not limited in the present application. When the handheld power tool 100 is directly in the hammer gear or the screw gear after startup, the controller 420 may increase the rotational speed of the electric motor 120 to V2 in various manners such as FOC field-weakening control, increasing the duty cycle of the electric motor 120, or increasing the conduction angle of the electric motor 120.

Similarly, when the handheld power tool 100 is the electric drill and includes only two working modes which are the drill gear and the screw gear, the manner in which the controller 420 controls the rotational speed of the electric motor 120 is the same as the preceding manner. The details are not repeated here.

In some examples, the controller 420 may maximize the duty cycle of the electric motor 120, that is, increase the duty cycle of the electric motor 120 to 100% so that the maximum rotational speed of the electric motor 120 reaches V1. In some examples, the controller 420 may control the duty cycle of the electric motor 120 to reach a first duty cycle so that the maximum rotational speed of the electric motor 120 reaches V1, that is, the first duty cycle corresponds to the rotational speed V1 of the electric motor 120. In some examples, the controller 420 increases the duty cycle of the electric motor 120 to a second duty cycle so that the maximum rotational speed of the electric motor 120 reaches V2, that is, the second duty cycle corresponds to the rotational speed V2 of the electric motor 120. Similarly, when the rotational speed of the electric motor 120 is V1, the controller 420 controls the duty cycle of the electric motor 120 to decrease to the second duty cycle so that the maximum rotational speed of the electric motor 120 decreases to V2.

In some examples, the controller 420 increases the conduction angle of the electric motor 120 in the manner below.

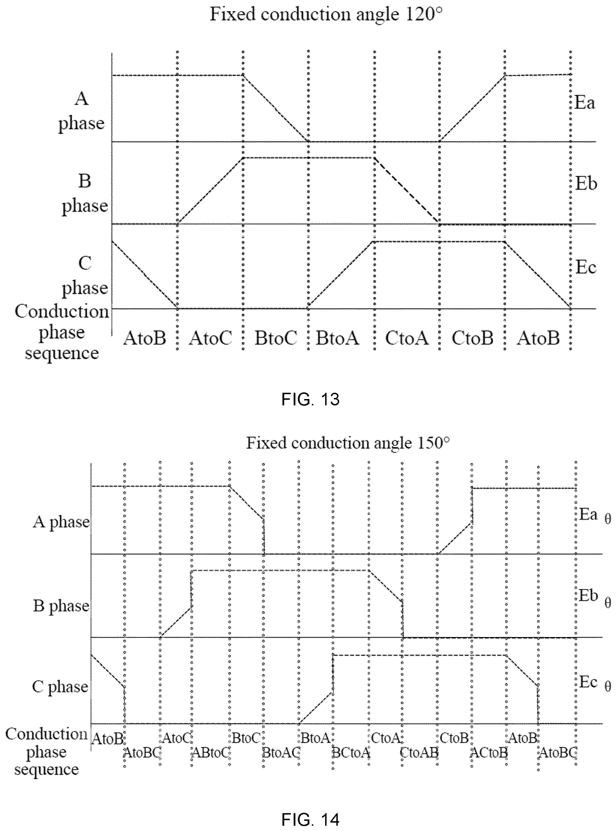

To drive the electric motor 120 shown in FIG. 9 to rotate, the driver circuit 410 generally has at least six driving states, and each switching of the driving state corresponds to one commutation action of the electric motor 120. As shown in FIG. 13, a horizontal axis represents the commutation points of the stator within a cycle of 360°, and a vertical axis represents the back electromotive forces of the three-phase windings. In FIG. 13, the electric motor commutates once every time the rotor rotates by 60°. An interval from the commutation of the electric motor 120 to the next commutation of the electric motor 120 is defined as a commutation interval. As can be seen from FIG. 13, within a commutation cycle of 360°, six commutations exist, and the three-phase windings of the electric motor 120 are all turned on for 120°, that is, the conduction angle is 120°. The commutation manner of the stator windings shown in FIG. 13 is generally referred to as a manner in which two phases of windings commutate and are turned on, that is, a pairwise conduction manner. In the pairwise conduction manner, the field weakening capability of the stator windings of the electric motor 120 is not high, and the effect of increasing the rotational speed of the electric motor 120 is not obvious.

Generally, to improve the field weakening capability and increase the rotational speed of the electric motor 120, the conduction angle is increased. For example, the conduction angle is increased such that the conduction angle is greater than 120°. To increase the conduction angle, the equivalent voltage applied to the stator windings is generally increased. For the three-phase electric motor, the increase of the conduction phases of the stator windings refers to the change from the state where two phases of windings commutate and are turned on to the state where three phases of windings commutate and are turned on, that is, the switch from conduction in twos to conduction in threes. For example, one commutation action is performed every time when the rotor rotates by 30°, that is, twelve commutation actions are performed within a commutation cycle of 360° so that it can be ensured that the three-phase windings are all turned on during the commutation process of the three-phase windings of the electric motor 120, and the conduction angle is greater than 120°. For example, the conduction angle is 150°. As shown in FIG. 14, when the electric motor 120 commutates every 30°, the stator windings switch from conduction in twos to conduction in threes, and at the next commutation, the stator windings switch from conduction in threes to conduction in twos. As can be seen from the comparison between FIGS. 14 and 13, the stator windings commutate in advance by 30°. Therefore, compared with the original conduction angle, the conduction angle of the stator windings increases by 30°, that is, the conduction angle is 150°. In addition, in addition to 150°, the conduction angle may be increased to any other angle that corresponds to V1 or V2 and is greater than 120° and less than 180° so that the controller 420 controls the maximum rotational speed of the electric motor 120 to be V1 or V2.

In some examples, that the controller 420 decreases the conduction angle of the electric motor 120 includes: when the conduction angle of the electric motor 120 corresponds to V1, controlling the conduction angle of the electric motor 120 to decrease to a value corresponding to V2.

Optionally, when the handheld power tool 100 is in the drill gear, the maximum rotational speed of the working head 1601 of the handheld power tool 100 is greater than or equal to 2800 rpm. Optionally, when the handheld power tool 100 is in the hammer gear, the maximum rotational speed of the working head 1601 of the handheld power tool 100 is greater than or equal to 2300 rpm. Optionally, when the handheld power tool 100 is in the drill gear, the maximum rotational speed of the working head 1601 of the handheld power tool 100 is greater than or equal to 2300 rpm.

In the handheld power tool 100 with the transmission mechanism 130 having the two-stage deceleration mechanism, that is, the dual-speed electric drill, the maximum rotational speed of the working head 1601 is greater than or equal to 2800 rpm. In this case, rotational speed limits are set for different working modes of the handheld power tool 100 so that when the working mode of the handheld power tool 100 is the drill gear, the electric motor 120 still maintains a high rotational speed, that is, the maximum rotational speed of the working head 1601 is greater than or equal to 2800 rpm. When the working mode of the handheld power tool 100 is the hammer gear or the screw gear, to avoid wear on the impact tooth 183 or the gear slipping gasket 184 and reduce the service life of the handheld power tool 100, the rotational speed of the electric motor 120 in this case is limited to be less than the rotational speed in the drill gear. Therefore, the service life of the dual-speed electric drill is guaranteed in the case where the working efficiency is relatively high.

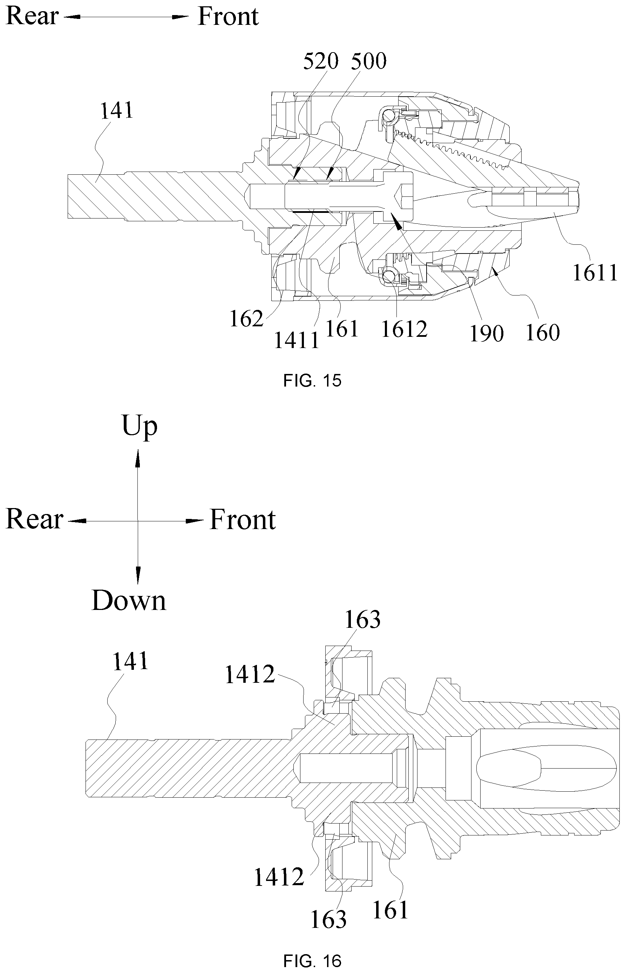

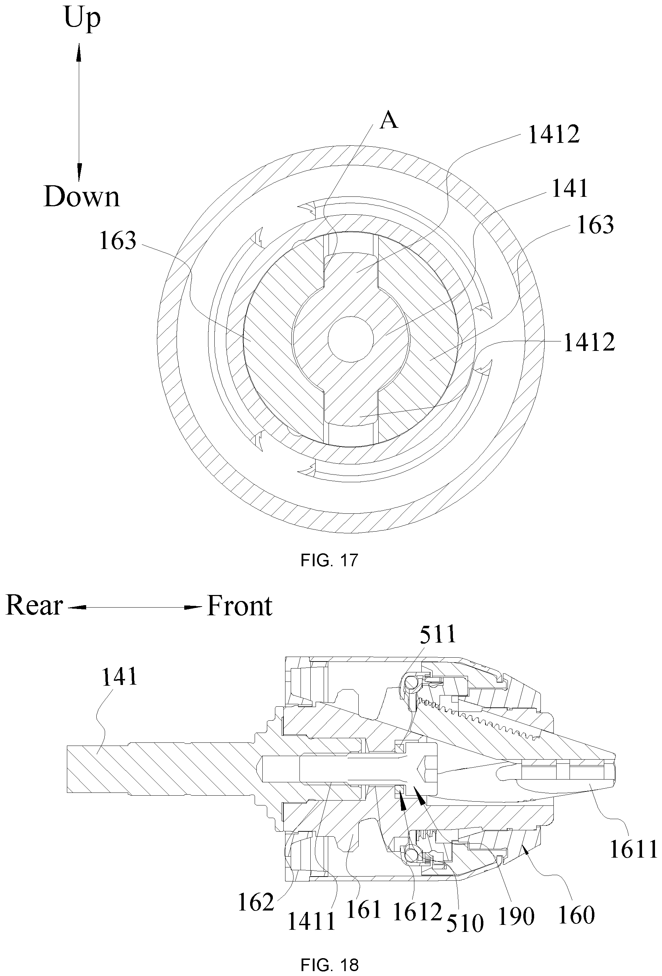

As shown in FIG. 15, the clamping mechanism 160 includes a chuck body 161. The chuck body 161 includes a clamping jaw 1611 for clamping a workpiece, that is, clamping the working head 1601. The output shaft 141 transmits torque to rotate the chuck body 161, where the output shaft 141 and the chuck body 161 are radially limited by a connecting hole 162 in the clamping mechanism 160, that is, the output shaft 141 is inserted into the connecting hole 162. The maximum rotational speed of the chuck body 161 is greater than or equal to 2800 rpm. The output shaft 141 includes an axial connecting groove 1411. Specifically, the axial connecting groove 1411 is disposed at an end of the output shaft 141 inserted into the chuck body 161. As shown in FIGS. 16 and 17, protrusions 1412 are symmetrically disposed on the upper and lower sides of the output shaft 141, the clamping mechanism 160 includes engagement portions 163 matching the protrusions 1412, and the output shaft 141 transmits torque to the engagement portions 163 through the protrusions 1412, thereby driving the chuck body 161 to rotate.

The handheld power tool 100 further includes an axial limiting member 190 located inside the chuck body 161 and used for connecting the chuck body 161 to the axial connecting groove 1411, that is, the axial limiting member 190 is used for connecting the chuck body 161 to the output shaft 141. The chuck body 161 includes a hole 1612 matching the axial limiting member 190. The axial limiting member 190 passes through the chuck body 161 via the hole 1612 and then penetrates the axial connecting groove 1411, thereby connecting the chuck body 161 to the axial connecting groove 1411.

In some examples, if the axial limiting member 190 is a screw 190, the axial connecting groove 1411 is a threaded hole, and the connection between the screw and the threaded hole is simple and reliable. In addition, the axial limiting member 190 may be any other component capable of implementing a connection function, which is not limited in the present application. In the present application, the case where the axial limiting member 190 is the screw 190 is used as an example for the specific description.

To facilitate the removal of the clamping mechanism 160 from the handheld power tool 100, as shown in FIG. 17, a gap A exists between the output shaft 141 and the chuck body 161. Specifically, the gap A exists between the protrusions 1412 of the output shaft 141 and the engagement portions 163. When the handheld power tool 100 is working, the relative displacement between the output shaft 141 and the chuck body 161 is caused by the existence of the gap A, and the frequent forward and reverse rotation of the handheld power tool 100 may cause the axial limiting member 190 to loosen easily. Therefore, an anti-loosening structure 500 needs to be disposed in the clamping mechanism 160 and the output shaft 141.

In some examples, the anti-loosening structure 500 includes an elastic member 510 and an anti-loosening material 520. The axial limiting member 190 is in direct or indirect contact with the elastic member 510 or the anti-loosening material 520, thereby increasing the pre-tightening force between the axial limiting member 190 and the axial connecting groove 1411.

In some examples, as shown in FIG. 15, the anti-loosening material 520 is disposed at the axial contact portion between the axial limiting member 190 and the axial connecting groove 1411. When the axial limiting member 190 is the screw 190, the anti-loosening material 520 is disposed on a screw shaft 191 of the screw 190. Optionally, the anti-loosening material 520 may be disposed on the entire axial contact portion between the axial limiting member 190 and the axial connecting groove 1411. Optionally, the anti-loosening material 520 may be disposed on a part of the axial contact portion between the axial limiting member 190 and the axial connecting groove 1411. Optionally, the anti-loosening material 520 may be anti-loosening glue. Optionally, the anti-loosening material 520 may be anaerobic adhesives. By providing the anti-loosening material 520, the gap between the axial limiting member 190 and the axial connecting groove 1411 is filled with the anti-loosening material 520 so that the axial limiting member 190 is fixed in the axial connecting groove 1411, thereby improving the tightness of the axial limiting member 190 connecting the chuck body 161 to the axial connecting groove 1411.

In some examples, the elastic member 510 includes an elastic piece 511. When the axial limiting member 190 is the screw 190, the elastic piece 511 is disposed between a nut 192 of the screw 190 and the chuck body 161 as specifically shown in FIG. 18. By providing the elastic piece 511, it is difficult for the screw shaft 191 to rotate in the threaded hole of the axial connecting groove 1411 so that the connection between the screw shaft 191 of the screw 190 and the threaded hole of the axial connecting groove 1411 is tighter.

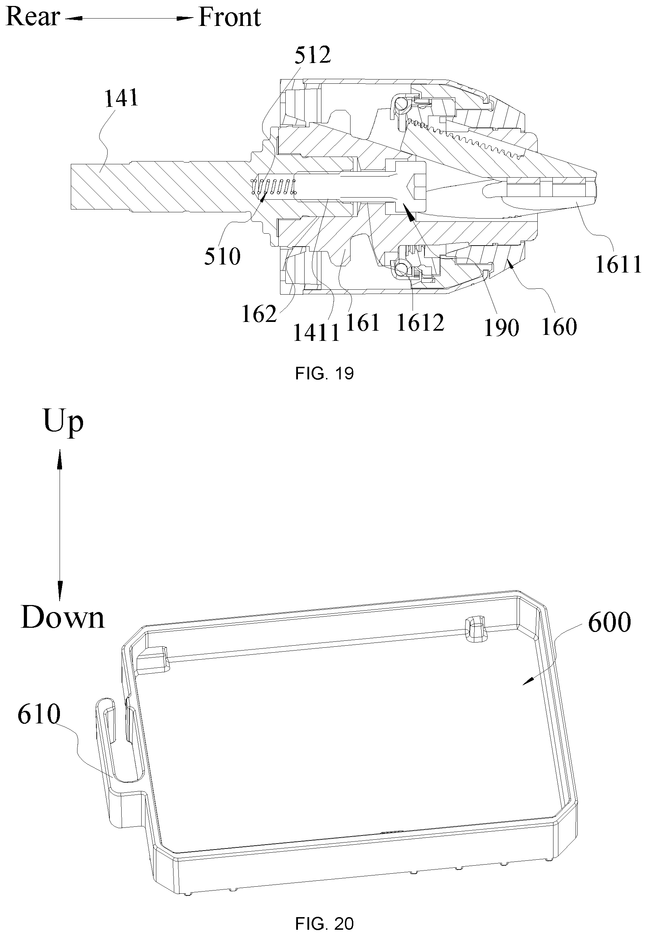

In some examples, the elastic member 510 includes a spring 512. When the axial limiting member 190 is the screw 190, the spring 512 is disposed between the end of the screw shaft 191 of the screw 190 (that is, the rear end of the handheld power tool 100) and the axial connecting groove 1411 as specifically shown in FIG. 19. By providing the spring 512 at the end of the screw shaft 191, the connection between the screw shaft 191 and the threaded hole of the axial connecting groove 1411 is made tighter due to the elastic compression of the spring 512.

In some examples, any one of the anti-loosening material 520, the elastic piece 511, and the spring 512 is provided to increase the pre-tightening force between the axial limiting member 190 and the axial connecting groove 1411. In some examples, any two of the anti-loosening material 520, the elastic piece 511, and the spring 512 are provided to increase the pre-tightening force between the axial limiting member 190 and the axial connecting groove 1411. In some examples, the anti-loosening material 520, the elastic piece 511, and the spring 512 are provided to increase the pre-tightening force between the axial limiting member 190 and the axial connecting groove 1411.

By providing the anti-loosening material 520 and/or the elastic member 510, the axial limiting member 190 can tightly connect the chuck body 161 to the axial connecting groove 1411. Even when the handheld power tool 100 frequently performs forward and reverse rotation, the axial limiting member 190 does not loosen and can maintain the tightness of the connection between the chuck body 161 and the axial connecting groove 1411. Therefore, when the axial limiting member 190 always performs the tight connection, no relative displacement occurs between the output shaft 141 and the chuck body 161 so that the displacement and wobbling of the chuck body 161 relative to the output shaft 141 can be effectively avoided, thereby improving the usage safety of the handheld power tool 100. In addition, the axial movement of the chuck body 161 can be avoided, the force-bearing area between the chuck body 161 and the output shaft 141 can be reduced, and the risk of the chuck body 161 being easily deformed can be avoided.

In some examples, as shown in FIG. 2, the handheld power tool 100 further includes a PCB box 600. The PCB box 600 is disposed inside the handheld power tool 100 and used for storing the PCB of the handheld power tool 100. Optionally, as shown in FIG. 20, a cable slot 610 is disposed on the side surface of the PCB box and used for assembling multiple connecting wires in the housing 110 so that the multiple connecting wires are stored and fixed in the cable slot 610, thereby solving the problem of friction between the multiple connecting wires. Moreover, the multiple connecting wires are stored and fixed in the cable slot 610 so that the messy connecting wires in the housing 110 can be avoided.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An electric drill, comprising:
a housing comprising at least a grip (113) and a battery pack interface (210), wherein the battery pack interface is used for mounting a battery pack for supplying power to the electric drill;
an electric motor (120) disposed in the housing and comprising a stator and a rotor;
a driver circuit (410) comprising a plurality of switches disposed on a current path from the battery pack to the electric motor;
a controller (420) configured to switch on and off the plurality of switches to adjust power supply from the battery pack to the electric motor; and
an output shaft (141) for mounting a working head (1601);
wherein the electric drill further comprises:
a transmission mechanism (130) connected between the rotor and the output shaft, wherein the transmission mechanism is a two-stage deceleration mechanism and comprises a first-stage deceleration mechanism (131, 133) and a second-stage deceleration mechanism (132, 134), the electric motor drives the working head to rotate via the transmission mechanism and the output shaft, and a maximum rotational speed of the working head is greater than or equal to 2800 rpm.

2. The electric drill of claim 1, wherein the electric drill comprises two speed gears which are a high speed gear and a low speed gear.

3. The electric drill of claim 1, wherein a diameter of the electric motor is greater than 50 mm.

4. The electric drill of claim 1, wherein a voltage of the battery pack is greater than or equal to 20 V.

5. The electric drill of claim 1, wherein the battery pack is a pouch battery pack.

6. The electric drill of claim 1, wherein a low speed ratio of the transmission mechanism is less than or equal to 15, and a high speed ratio of the transmission mechanism is greater than or equal to 45.

7. The electric drill of claim 6, wherein when the electric drill is in a high speed gear, a ratio of a rotational speed of the electric motor to a rotational speed of the working head is the low speed ratio; and when the electric drill is in a low speed gear, the ratio of the rotational speed of the electric motor to the rotational speed of the working head is the high speed ratio.

8. The electric drill of claim 1, wherein when torque of the electric drill is greater than or equal to 6 newton-meters and less than or equal to 8 newton-meters, a rotational speed of the electric drill is maintained at 2000 rpm.

9. The electric drill of claim 1, wherein the electric motor is configured to achieve the maximum rotational speed of the working head based on field-oriented control (FOC) control.

10. The electric drill of claim 1, wherein based on FOC field-weakening control, a maximum rotational speed of the electric motor is less than or equal to 40000 rpm.

11. The electric drill of claim 1, wherein the controller is configured to control a voltage outputted from the battery pack to the electric motor to change approximately in a sine wave or a saddle wave.

12. The electric drill of claim 1, further comprising an actuator sleeve (180) and a detection element, wherein the actuator sleeve is operable by a user to rotate about the output shaft to set a working mode of the electric drill, the detection element detects a rotational state of the actuator sleeve, and the controller is configured to be communicatively connected to the detection element to acquire the rotational state and acquire the working mode according to the rotational state.

13. The electric drill of claim 12, wherein when the electric drill is an impact drill, the working mode comprises a drill gear, a hammer gear, and a screw gear, and a rotational speed limit of the drill gear is higher than a rotational speed limit of the hammer gear and a rotational speed limit of the screw gear.

14. The electric drill of claim 13, wherein when the electric drill is in the drill gear, the maximum rotational speed of the working head of the electric drill is greater than or equal to 2800 rpm.

15. The electric drill of claim 13, wherein when the electric drill is in the hammer gear or the screw gear, the maximum rotational speed of the working head of the electric drill is greater than or equal to 2300 rpm.
